# EUROPEAN PATENT SPECIFICATION

(11) **EP 1 461 134 B1**
(45) Date of publication and mention of the grant of the patent: **21.03.2007**
(21) Application number: 02799754.3
(22) Date of filing: 31.12.2002
(51) Int. Cl.: B01D 45/16, B01D 45/12, B04C 5/26

(54) **MULTISTAGE FLUID SEPARATION ASSEMBLY AND METHOD**
MEHRSTUFIGE VORRICHTUNG UND VERFAHREN ZUR TRENNUNG VON FLUIDEN
ENSEMBLE ET PROCEDE DE SEPARATION DE FLUIDE A ETAGES MULTIPLES

(30) Priority: 31.12.2001 EP 01205147
(43) Date of publication of application: 29.09.2004
(73) Proprietor: SHELL INTERNATIONALE RESEARCH MAATSCHAPPIJ B.V., 2596 HR Den Haag (NL)
(72) Inventor: BAKKER, Hillegonda, NL-2288 GD Rijswijk (NL); TER HAAR, Max, Robert, Anthony, NL-2288 GD Rijswijk (NL); OKIMOTO, Fred, Toshio, NL-2288 GD Rijswijk (NL); TJEENK, Willink, Cornelis, Antonie, NL-2288 GD Rijswijk (NL)
(86) International application number: PCT/EP2002/014864
(87) International publication number: WO 2003/055575

(56) References cited:
- WO-A-00/74815
- WO-A-99/01194
- US-A- 2 825 423
- DATABASE WPI Section Ch, Week 198842 Derwent Publications Ltd., London, GB; Class J01, AN 1988-298406 XP002241109 & SU 1 386 248 A (SARAT SOYUZGAZAUTOM), 7 April 1988 (1988-04-07)

## Description

### BACKGROUND OF THE INVENTION

The invention relates to a multistage fluid separation assembly and method.

In many oil and/or gas production wells the well effluents may comprise complex fluid mixtures which contain crude oil, natural gas (methane), water, brine, condensates, sulphur, hydrogen sulphide and other components.

During production the well effluents expand and generally cool down from reservoir temperatures which may be between 100 and 200 degrees Celsius to significantly lower atmospheric or submarine temperatures.

This causes condensation and/or solidification of various components and formation of hydrate, wax and/or asphaltene deposits in the production tubulars and equipment.

It is known from US patent 4,026,120 to remove condensable and/or solidifiable components from the produced well effluents at the wellhead by cooling down the well effluents in a choke and injecting the cooled well effluents into a so called 'LTX' (Low Temperature expansion) vessel in which the liquified and/or solidified components, such as water, wax, asphaltenes and hydrates drip down to the bottom, where they are heated to about 20 degrees Celsius to create a pumpable liquid slurry which is then pumped into a liquid discharge conduit at the bottom part of the LTX vessel. The gaseous components are removed from the LTX vessel via a gas outlet conduit near the upper end of the LTX vessel.

US patent 4,208,196 discloses an LTX vessel into which well effluents are injected without prior expansion in a choke. The known LTX vessel is provided with a vertically oriented tubular inlet section into which the well effluents are injected tangentially to enhance segregation of liquefied and/or solidified components from the gaseous components by centrifugal forces. The tubular inlet section is capped and provided with a grating structure at its lower end to inhibit extension of the swirl induced in the inlet section into the liquid collecting region at the bottom of the LTX tank. The tubular inlet section is located inside a cylindrical and horizontal separation tank in which water and oil are collected and separated from each other by gravity segregation, and are subsequently tapped off via separate water and oil discharge tubes near the bottom of the tank. The gaseous components are induced to flow through the grating down from the tubular inlet section into the separation tank and removed from the top of the separation tank at a significant distance from the inlet section.

International patent application PCT/NL00/00382 discloses a separation vessel for separating heavy, such as liquid or solid, components from a gaseous mixture in which vessel countercurrent inner and outer swirls are induced by countercurrent swirl imparting vanes arranged near the center and outer periphery of the vessel. A disadvantage of this known device is that the swirl imparting vanes are prone to fouling.

International patent application PCT/EP98/04178 discloses a supersonic cyclonic inertia separator in which the produced well effluents are drastically cooled down by adiabatic expansion as a result of their acceleration to a supersonic velocity in a supersonic nozzle. In the supersonic nozzle a swirl is created to segregate the thus condensed and/or solidified heavy components from the lighter gaseous components. The gaseous condensables depleted components are discharged from the separator through a central primary gas outlet conduit whereas the condensables enriched components are discharged from the separator through one or more secondary outlet conduits which extend away from a central axis of the nozzle.

It has been found that the secondary condensables enriched fluid outlet of a supersonic cyclonic inertia separator may be connected to an LTX vessel, but that the high velocity of the injected liquefied and/or solidified condensables enriched fluid mixture resulted in a reduced gravity separation efficiency of the LTX vessel. The multistage fluid separation assembly and method according to the preamble of claims 1 and 17 are known from US patent 2,825,423. In the known assembly fluid is injected into a tubular section of a secondary separation vessel via a single secondary fluid injection conduit, which may lead to instability of the vortex in, and separating performance of, the secondary separation vessel if the pressure and velocity of the injected fluid fluctuates.

It is an object of the present invention to provide a hybrid multistage fluid separation assembly in which an LTX type separation vessel is connected to liquefied and/or solidified condensables enriched fluid outlet of one or more gas cooling devices such as supersonic and/or subsonic cyclonic inertia separators such that a synergetic effect is obtained between the performance of the gas cooling device, such as a cyclonic inertia separator, and the LTX separation vessel.

It is a further object to provide a hybrid multistage fluid separation assembly, which is more compact than a combination of a gas cooling device, such as a cyclonic inertia separator, and a conventional LTX vessel.

It is yet a further object to provide a hybrid multistage fluid separation assembly in which a plurality of gas cooling devices, such as cyclonic inertia separators, can be connected to a single compact LTX vessel by relatively short liquefied and/or condensables enriched fluid outlet conduits such that the risk of solids, wax and/or hydrate deposition in these secondary outlet conduits is minimized.

### SUMMARY OF THE INVENTION

In accordance with the invention there is provided a multistage fluid separation assembly comprising:
a primary gas cooling device which has a liquefied and/or solidified condensables enriched fluid outlet; and
a secondary fluid separation vessel having a tubular section of which a central axis has a substantially vertical or tilted orientation, which vessel is connected to said condensables enriched fluid outlet of at least one of said gas cooling devices, wherein during normal operation of the vessel the condensables enriched fluid is induced to swirl around the central axis of the tubular section of the vessel such that a tertiary stream of liquefied and/or solidified condensables is induced by gravity and centrifugal forces to swirl in downward direction alongside the inner surface of the tubular section of the vessel into a liquid collecting tank at or near the bottom of the vessel for collecting a tertiary mixture of liquefied and/or solidified condensables, which tank is provided with one or more heaters for heating the tertiary mixture to reduce the amount of solidified condensables and with one or more outlets for discharging the tertiary mixture from the tank, wherein a plurality of secondary fluid injection conduits of a plurality of primary gas cooling devices are connected at regular circumferential intervals to the tubular section of the secondary separation vessel, which conduits inject in use condensables enriched fluid in an at least partially tangential direction into the interior of the secondary separation vessel.

It is preferred that the tubular section of the secondary separation vessel is equipped with a tertiary gas outlet conduit having an inlet which is located at or near the central axis of the tubular section and which tertiary gas outlet extends through an upper end of the tubular section of the secondary separation vessel.

Suitably, the secondary separation vessel has a dome-or disk-shaped top, which is mounted on top of the tubular section and the tertiary gas outlet conduit is arranged substantially co-axial to the central axis of the tubular section and passes through the center of the top.

Preferably, the liquefied and/or solidified condensables enriched fluid outlet of at least one primary cooling device, such as a cyclonic fluid separator, is connected to a secondary fluid injection conduit which injects the condensables enriched fluid in an at least partially tangential direction into the tubular section of the secondary separation vessel.

It is also preferred that the central axis of the tubular section of the secondary separation vessel has a substantially vertical orientation and that the secondary fluid injection conduits inject in use liquefied and/or solidified condensables enriched fluid in an at least partially tangential and partially downward direction into the interior of the secondary separation vessel.

Suitably, the liquid collecting tank is formed by a cup-shaped tubular lower portion of the second stage separation vessel which is substantially co-axial to the central axis and has a similar or larger internal width than the upper portion of the vessel and a vortex breaker is arranged in the interior of the secondary separation vessel between the lower end of the tubular section and the liquid collecting tank.

The assembly may be provided with one or more ultrasonic vibration transducers for imposing ultrasonic vibrations at a frequency between 20 and 200 KHz on one or more components of the assembly, such as the secondary fluid injection tubes and the vortex breaker, to inhibit deposition of solidified condensables, such as ice, wax and/or hydrates, within the assembly.

The liquid collecting tank may be provided with a grid of heating tubes, which are designed to heat the liquid and solid fluid mixture in the tank to a temperature of at least 15 degrees Celsius.

One or more primary gas cooling devices may comprise cyclonic inertia separators which comprise an expansion nozzle in which the fluid mixture is cooled to a temperature lower than 0 degrees Celsius by a substantially isentropic expansion and in which one or more swirl imparting vanes induce the fluid to swirl into a diverging outlet section which is equipped with a central primary condensables depleted fluid outlet conduit and an outer secondary condensables enriched fluid outlet conduit.

Suitably each primary gas cooling device, such as a cyclonic inertia separator, comprises an expansion nozzle, which is designed to accelerate the fluid mixture within the nozzle to a supersonic speed, thereby cooling in use the temperature of the fluid passing through the nozzle to a temperature lower than -20 degrees Celsius.

The fluid separation assembly according to the invention may comprise a plurality of primary cyclonic inertia separators of which the expansion nozzles are substantially parallel and equidistant to the central axis of the tubular section of the secondary separation vessel and of which the secondary condensables enriched fluid outlets are connected to secondary fluid injection conduits which intersect the wall of the tubular section of the secondary separation vessel at regular circumferential intervals and in an at least partially tangential direction, and which secondary fluid injection conduits each have a length less than 4 meter.

The gas cooling devices may comprise chokes known as Joule-Thompson valves in which the gas is accelerated and cooled by expansion such that a liquefied and/or solidified condensables enriched fluid is generated, which is subsequently fed into the secondary fluid separation vessel.

The invention also relates to a method of separating condensable components from a fluid mixture in a multistage fluid separation assembly, which method comprises:
injecting the fluid mixture into a primary gas cooling device in which the fluid mixture is expanded and cooled and condensable components are liquefied and/or solidified and optionally separated from the gaseous components by centrifugal force, and in which a stream of condensables enriched fluid components is fed into a secondary fluid outlet; and
injecting the stream of condensables enriched fluid components into a secondary fluid separation vessel having a tubular section of which a central axis has a substantially vertical or tilted orientation and in which the condensables enriched fluid stream is induced to swirl around the central axis of the tubular section of the vessel such that a tertiary mixture of liquefied and/or solidified condensables is induced by gravity and centrifugal forces to swirl in downward direction alongside the inner surface of the tubular section of the vessel into a liquid collecting tank at or near the bottom of the vessel, in which tank the tertiary mixture of liquefied and/or solidified condensables is collected and heated to reduce the amount of solidified condensables and from which tank liquid and/or solidified components are discharged through one or more outlets, wherein a plurality of secondary fluid injection conduits of a plurality of primary gas cooling devices are connected at regular circumferential intervals to the tubular section of the secondary separation vessel , which conduits inject condensables enriched fluid in an at least partially tangential direction into the interior of the secondary separation vessel.

### DESCRIPTION OF SUITABLE EMBODIMENTS

Suitable embodiments of a multistage fluid separation assembly according to the present invention will be described in more detail with reference to the accompanying drawings wherein:
Fig. 1 is a schematic vertical split sectional view of a first suitable embodiment of a multistage fluid separation assembly according to the invention wherein four primary cyclonic inertia separators discharge a condensables enriched fluid mixture into a vertically oriented tubular secondary fluid separation vessel;
Fig.2 is a top view of the multistage fluid separation assembly of Fig. 1;
Fig.3 is a schematic vertical split sectional view of another suitable embodiment of a multistage fluid separation assembly according to the invention wherein two primary cyclonic inertia separators discharge a condensables enriched fluid mixture into a horizontally oriented secondary fluid separation vessel;
Fig.4 is a horizontal cross-sectional view of the multistage fluid separation assembly of Fig.3, taken across the primary cyclonic inertia separators and seen from above;
Fig. 5 is a schematic horizontal sectional view of a simplified multistage fluid separation assembly of which the primary gas cooling devices consist of chokes known as Joule Thompson valves; and
Fig. 6 is a schematic vertical sectional view of the assembly shown in Fig. 5.

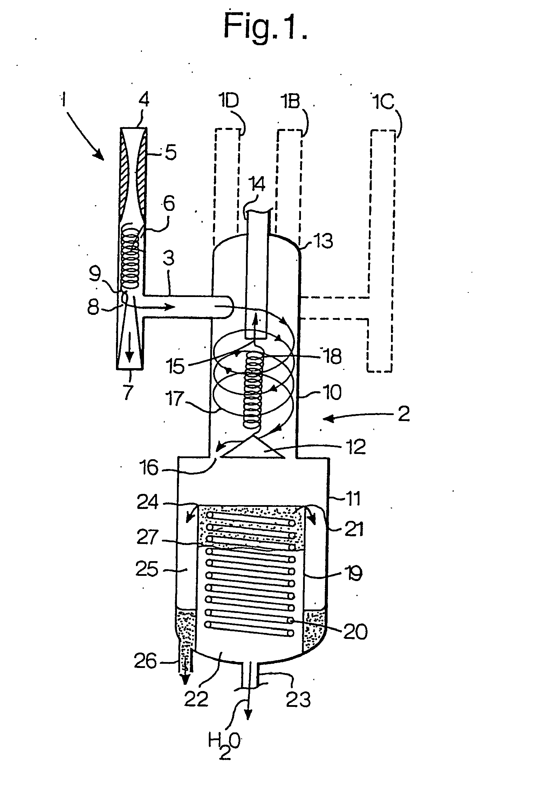

Referring to Fig.1 there is shown a primary cyclonic inertia separator 1 which is connected to a secondary LTX fluid separation vessel 2 by a secondary condensables enriched fluid injection conduit 3.

The primary cyclonic inertia separator 1 comprises a fluid inlet 4 which is connected to a wellhead (not shown) of a natural gas production well via which a mixture of natural gas, water vapours, condensates, hydrates and other condensable components are produced.

The fluid mixture flowing into the primary separator 1 is first accelerated to a high, preferably supersonic, velocity in a nozzle 5 and thereby cooled down preferably to a temperature below -20 degrees Celsius, such that water vapour and/or other condensables condense and/or solidify as a result of adiabatic expansion and subsequently induced to swirl by a tilted wing 6 so that the cooled fluid mixture is separated by centrifugal forces into a central flux of condensables depleted natural gas and an annular outer flux of condensables enriched fluid.

The central flux of condensables depleted natural gas is discharged through a central primary condensables depleted outlet 7 into a gas distribution conduit (not shown) and the annular outer flux of condensables enriched fluid is discharged through an annular condensables enriched fluid outlet chamber 8 into the secondary condensables enriched fluid injection conduit 3 as illustrated by arrow 9.

The condensables enriched fluid injection conduit 3 feeds the condensables enriched fluid into a vertical section 10 of the secondary LTX fluid separation vessel 2 for further separation into substantially dry gas, water and liquefied hydrocarbons and hydrates.

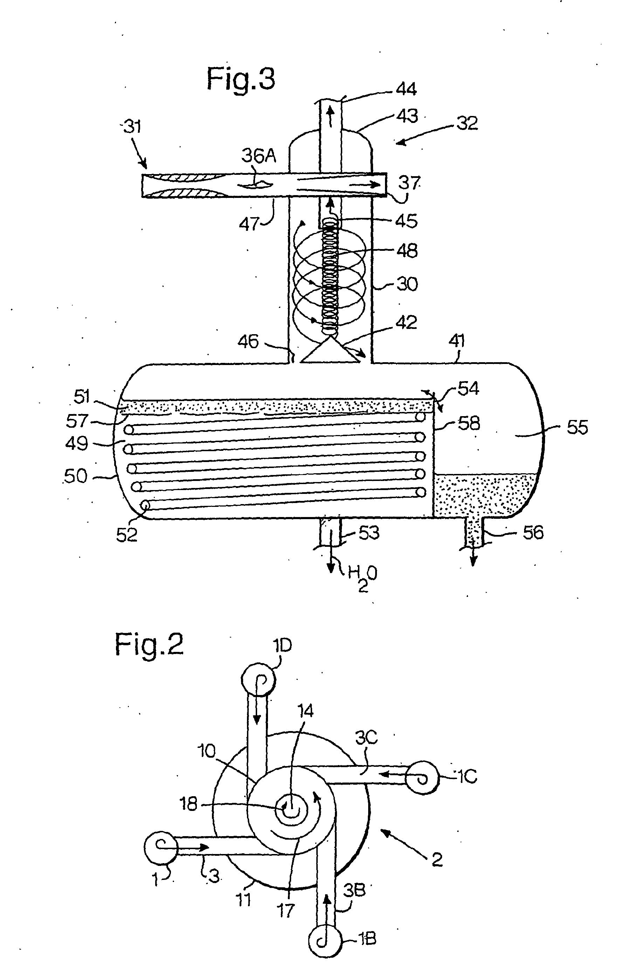

As illustrated in Fig.2 a series of four primary inertia separators 1,1B,1C and 1D feed condensable enriched fluid tangentially into the vertical tubular section 10 of the secondary LTX separation vessel 2 via a series of four condensables enriched fluid injection conduits 3, 3B, 3C and 3D.

In Fig. 1 a schematic vertical split sectional view is given of the first primary inertia separator 1 and of the secondary LTX separation vessel 2 and the contours of other three primary inertia separators 1B, 1Cand 1D are illustrated in dotted lines.

As illustrated in Fig. 1 the secondary LTX separation vessel 2 comprises below the vertical tubular section 10 a large diameter bottom section 11 in which a tertiary stream of liquids is collected and further separated, a vortex breaker 12 which is located between the tubular and bottom sections 10 and 11 and a dome-shaped top 13 through which a tertiary gas outlet conduit 14 extends into the tubular section 10.

The entrance 15 of the tertiary gas outlet conduit 14 is located below the level at which the condensables enriched fluid inlet conduit 3 debouches into the tubular section 10 of the secondary separation vessel 2.

The fluid injected via the tangential fluid injection conduits 3 into the tubular section 10 will circulate, when seen from above in an anti-clockwise direction, alongside the inner wall of the tubular section 10 as illustrated by arrows 17. A tertiary stream of liquid and/or solid components will be concentrated in the outer periphery of the interior of the tubular section 10 and will as a result of gravitational forces drop through the annular gap 16 alongside the outer circumference of the vortex breaker 12 into a liquid collecting tank 19 within the large diameter bottom section 11 of the secondary fluid separation vessel 2.

Low density gaseous components of the fluid mixture injected via the tangential fluid injection conduits 3, 3B, 3C and 3D into the tubular section 10 will be concentrated near the centre of the tubular section 10 and will flow up into the tertiary gas outlet 14. The arrangement of the entrance 15 of the tertiary gas outlet 14 below the level at which the tangential fluid injection conduits 3, 3B, 3C and 3D inject fluid into the tubular section 10 will generally induce the gaseous components to swirl as an eddy current 18 in an opposite, when seen from above, clockwise direction. The clockwise circulating eddy current 18 of substantially dry gas, which circulates as a result of the Hirsch-Rankin effect in a direction opposite to the outer stream 17 of condensables further enhances the separation of dry gas from the liquid and/or solid components. The vortex breaker 12 has a conical shape and the top of the vortex breaker 12 performs as a vortex seeker for the clockwise rotating central eddy current 18 of dry gas.

The tubular section 10 is a substantially open vessel without swirl imparting vanes, in order to minimise the risk of plugging and/or contamination of the interior of the vessel.

The liquid collecting tank 19 is equipped with heating coils 20 which maintain the collected liquid and solid components at a substantially constant temperature between 15 and 25 degrees Celsius. At this temperature waxes and hydrates will melt and will float up above the water in the liquid collecting tank, such that a top layer 21 of wax, hydrates, condensate and other hydrocarbon liquids will float above a lower layer 22 of water.

Water (H₂O) is discharged through a water discharge conduit 23 at the bottom of the liquid collecting tank 19, whereas the mixture of wax, hydrates, condensate and other hydrocarbons will flow over the upper rim 24 of the liquid collecting tank 19 into an annular hydrocarbon liquids collecting zone 25 which is equipped with a hydrocarbon liquids discharge conduit 26. The water discharge conduit 23 is equipped with a valve (not shown), which is controlled such that the water/hydrocarbon liquids interface 27 is maintained at a substantially constant level.

Optionally the vortex breaker 12 and the walls of the vertical tubular section 10 of the secondary separation vessel 2 and the conduits 3, 3B, 3C and 3D are heated and/or equipped with ultrasonic vibration transducers (not shown) to inhibit deposition of wax, scale and hydrates and other fouling on these components. The ultrasonic vibration transducers preferably vibrate the walls of these fouling sensitive components at a frequency between 20 and 200 KHz to shake off any fouling.

The compact configuration of the multistage separation assembly according to the invention makes it very suitable for use on offshore platforms where deckspace is limited and the presence of small surface areas within the short conduits 3, 3B, 3C and 3D and within the secondary separation vessel 2 which are vulnerable to fouling and which can be heated and vibrated to remove any fouling allows the use of primary cyclonic separators in which the wet gas is adiabatically cooled to a very low temperature, which may be below minus 20 or even below minus 40 degrees Celsius, such that a maximum amount of water, hydrates, waxes and/or other condensable and/or solidifiable components are condensed and/or solidified without obstructing the associated peripheral conduits 3, 3B,3C and 3D and secondary LTX separation vessel 2.

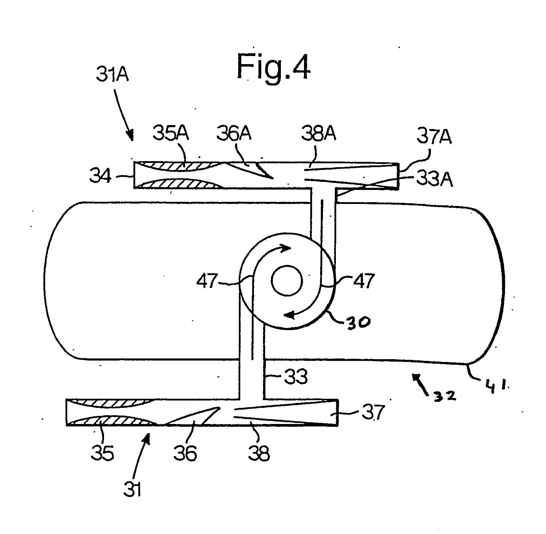

Referring now to Figures 3 and 4 there is shown another suitable configuration of a multistage fluid separation assembly according to the invention wherein two primary cyclonic inertia separators 31 and 31A discharge a condensables enriched fluid mixture via conduits 33 and 33A tangentially into a vertical tubular top section 30 of a secondary LTX fluid separation vessel 32.

The two primary cyclonic inertia separators 31 and 31A have a horizontal orientation but are otherwise similar to the primary cyclonic inertia separators 1-1D shown in Figures 1 and 2 and also comprise a wet gas inlet 34, a nozzle 35, 35A in which the wet natural gas stream is accelerated to a preferably supersonic or near sonic velocity and thereby adiabatically cooled to minus 20 to minus 40 degrees Celsius such that water and other condensable and/or solidifiable components condense and/or solidify and the cooled fluid mixture is swirled around by one or more swirl imparting vanes 36, 36A and separated by centrifugal inertia forces into a central flux of substantially dry gas which is discharged through a central gas outlet 37, 37A and an annular flux of a condensables enriched fluid which is discharged via an annular collecting zone 38, 38A into the conduits 33 and 33A.

The secondary LTX separation vessel 32 comprises below the vertical tubular top section 30 an elongate horizontally oriented tubular bottom section 41 in which liquids are collected and further separated, a vortex breaker 42 which is located between the tubular top and bottom sections 30 and 41 and a dome-shaped cap 43 through which a tertiary gas outlet conduit 44 extends into the tubular top section 38.

The entrance 45 of the tertiary gas outlet conduit 44 is located below the level at which the condensables enriched fluid inlet conduits 33 and 33A debouch into the tubular top section 30 of the secondary separation vessel 32.

The fluid injected via the tangential fluid injection conduits 33 and 33A into the tubular top section 30 will circulate, when seen from above in a clockwise direction, alongside the inner wall of the tubular top section 30 as illustrated by arrows 47. Liquid and/or solid components will be concentrated in the outer periphery of the interior of the tubular section 30 and will as a result of gravitational forces fall down through the annular gap 46 alongside the outer circumference of the vortex breaker 42 into a liquid collecting tank 49 within the elongate tubular bottom section 41 of the secondary fluid separation vessel 32.

Low density gaseous components of the fluid mixture injected via the tangential fluid injection conduits 33 and 33A into the tubular top section 30 will be concentrated near the centre of the tubular top section 30 and will flow up into the tertiary gas outlet 44. The arrangement of the entrance 45 of the tertiary gas outlet 44 below the level at which the tangential fluid injection conduits 44 inject fluid into the tubular top section 30 will generally induce the gaseous components to swirl as an eddy current 48 in an opposite, when seen from above, anti-clockwise direction. The anti-clockwise circulating eddy current 48 of substantially dry gas, which circulates in a direction opposite to the outer stream 47 of condensables further enhances the separation of dry gas from the liquid and/or solid components. The vortex breaker 42 has a conical shape and the top of the vortex breaker 42 performs as a vortex seeker for the anti-clockwise rotating central eddy current 48 of dry gas.

The liquid collecting tank 49 is equipped with heating coils 50 which maintain the collected liquid and solid components at a substantially constant temperature between 15 and 45 degrees Celsius. At this temperature waxes and hydrates will melt and will float up above the water in the liquid collecting tank, such that a top layer 51 of wax, hydrates, condensate and other hydrocarbon liquids will float above a lower layer 52 of water. The foamy top layer 51 will also minimize re-evaporation of the liquid hydrocarbons and will therefore keep the hydrocarbon dewpoint in the upper part of the interior of the LTX vessel 2 low.

Water (H₂O) is discharged through a water discharge conduit 53 at the bottom of the liquid collecting tank 49, whereas the mixture of wax, hydrates, condensate and other hydrocarbons will flow over the upper rim 54 of a bulkhead 58 at the right side of the liquid collecting tank 49 into a hydrocarbon liquids collecting zone 55 which is equipped with a hydrocarbon liquids discharge conduit 56. The water discharge conduit 53 is equipped with a valve (not shown), which is controlled such that the water/hydrocarbon liquids interface 57 is maintained at a substantially constant level.

Optionally the vortex breaker 42 and the walls of the vertical tubular top section 30 of the secondary separation vessel 32 and the conduits 33 and 33 are heated and/or equipped with ultrasonic vibration transducers (not shown) to inhibit deposition of wax, scale and hydrates and other fouling on these components. The ultrasonic vibration transducers preferably vibrate the walls of these fouling sensitive components at a frequency between 20 and 200 KHz to shake off any fouling.

The large volume and horizontal surface area of the liquid collecting tank 49 facilitate low liquid velocities of the separated water and liquefied hydrocarbon components such that an optimal gravity separation of the aqueous and hydrocarbon phases takes place within the tank 49.

It will be understood that the bulkhead 58 may be removed from the tubular bottom section 41 of the vessel 32 and that the hydrocarbon liquid outlet 56 may pass through the sidewall of said tubular bottom section 41 just below the upper surface of the foamy top layer 51 of hydrocarbon liquids.

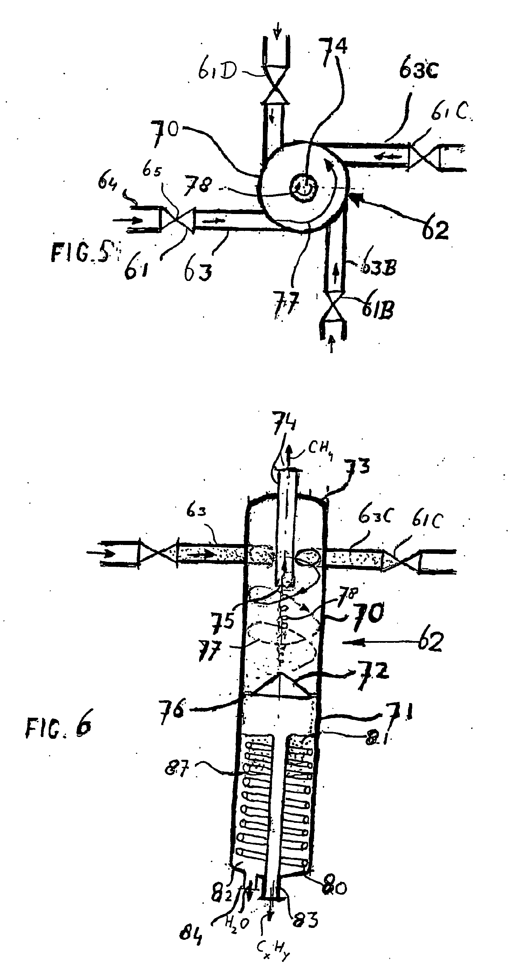

Referring to Fig. 5 and 6 there is shown a set of four primary cooling devices 61,61B, 61C, and 61D which are connected to a secondary LTX fluid separation vessel 62 by a set of four tangential secondary condensables enriched fluid injection conduits 63, 63B, 63C and 63D.

Each primary cooling device comprises a fluid inlet 64 which is connected to a wellhead (not shown) of a natural gas production well via which a mixture of natural gas, water vapours, condensates, hydrates and other condensable components is produced.

The fluid mixture flowing into each primary cooling device 61, 61B, 61C and 61D is accelerated to a high, preferably supersonic, velocity in a flow restriction 65, such as a venturi, choke, or Joule Thompson valve and thereby cooled down preferably to a temperature below -20 degrees Celsius, such that water vapour and/or other condensables condense and/or solidify as a result of adiabatic expansion whereupon a liquefied and/or solidified condensables enriched fluid mixture flows into the narrow secondary fluid injection conduits 63, 63B, 63C and 63D.

Each condensables enriched fluid injection conduit 63, 63B, 63C and 63D feeds the liquefied and/or solidified condensables enriched fluid at high speed into a vertical section 70 of the secondary LTX fluid separation vessel 62 for separation into substantially dry gas, water and liquefied hydrocarbons and hydrates.

As illustrated in Fig. 5 a series of four primary inertia separators 61, 61B, 61C and 61D feed a liquefied and/or solidified enriched fluid mixture tangentially into the vertical tubular section 70 of the secondary LTX separation vessel 62 via a series of four condensables enriched fluid injection conduits 63, 63B, 63C and 63D.

In Fig. 6 a schematic vertical sectional view is given of the primary inertia separator 61 and 61C and of the secondary LTX separation vessel 62.

As illustrated in Fig. 6 the secondary LTX separation vessel 62 comprises below the vertical tubular section 70 a bottom section 71 in which a tertiary stream of liquids is collected and further separated, a vortex breaker 72 which is located between the tubular and bottom sections 70 and 71 and a dome-shaped top 73 through which a tertiary gas outlet conduit 74 extends into the tubular section 70.

The entrance 75 of the tertiary gas outlet conduit 74 is located below the level at which the condensables enriched fluid inlet conduits 63, 63A, 63B and 63C debouch into the tubular section 70 of the secondary separation vessel 62.

The fluid injected via the tangential fluid injection conduits 63 into the tubular section 70 will circulate, when seen from above in an anti-clockwise direction, alongside the inner wall of the tubular section 70 as illustrated by arrows 77. A tertiary stream of liquid and/or solid components will be concentrated in the outer periphery of the interior of the tubular section 70 and will as a result of gravitational forces drop through the annular gap 76 alongside the outer circumference of the vortex breaker 72 into a liquid collecting tank 79 within the bottom section 71 of the secondary fluid separation vessel 62.

Low density gaseous components such as methane (CH₄) etc. of the fluid mixture injected via the tangential fluid injection conduits 63, 63B, 63C and 63D into the tubular section 70 will be concentrated near the centre of the tubular section 70 and will flow up into the tertiary gas outlet 74. The arrangement of the entrance 75 of the tertiary gas outlet 74 below the level at which the tangential fluid injection conduits 63, 63B, 63C and 63D inject fluid into the tubular section 70 will generally induce the gaseous components to swirl as an eddy current 78 in an opposite, when seen from above, clockwise direction. The clockwise circulating eddy current 78 of substantially dry gas, which circulates as a result of the Hirsch-Rankin effect in a direction opposite to the outer stream 77 of condensables further enhances the separation of dry gas from the liquid and/or solid components. The vortex breaker 72 has a conical shape and the top of the vortex breaker 72 performs as a vortex seeker for the clockwise rotating central eddy current 78 of dry gas.

The bottom section 71 of the vessel 62 is equipped with heating coils 80 which maintain the collected liquid and solid components at a substantially constant temperature between 15 and 25 degrees Celsius. At this temperature waxes and hydrates will melt and will float up above the water in the liquid collecting tank, such that a top layer 81 of wax, hydrates, condensate and other hydrocarbon liquids (CₓH_{y}) will float above a lower layer 82 of water.

Water (H₂O) is discharged through a water discharge conduit 64 at the bottom of the vessel 62, whereas the mixture of wax, hydrates, condensate and other hydrocarbons (CₓH_{y}) are discharged via a central hydrocarbon liquids discharge conduit 83. The discharge conduits 83 and 84 may be equipped with valves (not shown), which may be controlled such that the water/hydrocarbon liquids interface 87 is maintained at a substantially constant level.

If desired water and hydrocarbons may be discharged from the vessel 62 via a single liquid outlet at the bottom of the vessel 62 for further separation in a separation unit (not shown) downstream of the vessel 62.

Optionally the vortex breaker 72 and the walls of the vertical tubular section 70 of the secondary separation vessel 62 and the conduits 63, 63B, 63C and 63D are heated and/or equipped with ultrasonic vibration transducers (not shown) to inhibit deposition of wax, scale and hydrates and other fouling on these components. The ultrasonic vibration transducers preferably vibrate the walls of these fouling sensitive components at a frequency between 20 and 200 KHz to shake off any fouling.

The multistage fluid separation assembly according to the invention is also useful for separating solid particles from a gaseous fluid stream. In the gas cooling devices the solid particles will serve as nucleation sources which promote droplet growth of liquefied condensables. The solid particles will flow together with the liquefied condensables into the liquid collecting tank of the secondary fluid separation vessel and are thereby separated from the tertiary stream of condensables depleted, substantially dry gas, that is discharged from the top of the secondary fluid separation vessel.

## Claims

1. A multistage fluid separation assembly comprising:
a primary gas cooling device (1,31,61)which has a liquefied and/or solidified condensables enriched fluid outlet (3, 33, 63); and
a secondary fluid separation vessel (2,32,62) having a tubular section (10,30,70) of which a central axis has a substantially vertical or tilted orientation, which vessel is connected to said condensables enriched fluid outlet (3,33,63) of said primary gas cooling device (1,31,61), wherein during normal operation of the vessel (2,32,62) the condensables enriched fluid is induced to swirl around the central axis of the tubular section (10,30,70) of the vessel such that a tertiary stream (17,77) of liquefied and/or solidified condensables is induced by gravity and centrifugal forces to swirl in downward direction alongside the inner surface of the tubular section (10,30,70) of the vessel into a liquid collecting tank (11,41,71) at or near the bottom of the vessel for collecting a tertiary mixture of liquefied and/or solidified condensables, which tank (11,41,71)is provided with one or more heaters (20,52,80)for heating the tertiary mixture to reduce the amount of solidified condensables and with one or more outlets (23,26,53,56,83,84) for discharging the tertiary mixture from the tank (11,41,71);
**characterized in that** a plurality of secondary fluid injection conduits (3,33,63) of a plurality of primary gas cooling devices (1,31,61) are connected at regular circumferential intervals to the tubular section (10,30,70) of the secondary separation vessel (2,32,62), which conduits (3,33,63) inject in use condensables enriched fluid in an at least partially tangential direction into the interior of the secondary separation vessel (2,32,62).

2. The fluid separation assembly of claim 1, wherein the liquid collecting tank (11,41,71)comprises an upper liquid outlet (26,56,83) for low density liquid components and a lower liquid outlet (23,53,84) for high density liquid components.

3. The fluid separation assembly of claim 1 or 2, wherein the tubular section (10,30,70)of the secondary separation vessel (2,32,62)is equipped with a tertiary gas outlet conduit (14,44,74) having an inlet which is located at or near the central axis of the tubular section (10,30,70).

4. The fluid separation assembly of claim 3, wherein the secondary separation vessel (2,32,62) has a dome or disk shaped top (13,43,73)which is mounted on top of the tubular section (10,30,70)and the tertiary gas outlet conduit (14, 44, 74) is arranged substantially co-axial to the central axis of the tubular section and passes through said top.

5. The fluid separation assembly of claim 1, wherein the liquefied and/or solidified condensables enriched fluid outlet (3,33,63)of at least one primary gas cooling device (1,31,61) is connected to a secondary fluid injection conduit (3, 33, 63) which injects in use the condensables enriched fluid in an at least partially tangential direction into the tubular section (10, 30, 70) of the secondary separation vessel (2,32,62).

6. The fluid separation assembly of claim 5, wherein the central axis of the tubular section (10,30,70) of the secondary separation vessel(2,32,62) has a substantially vertical orientation and said plurality of secondary fluid injection conduits (3,33,63) inject in use condensables enriched fluid in an at least partially tangential and partially downward direction into the interior of the secondary separation vessel(2,32,62).

7. The fluid separation assembly of claim 1, wherein the liquid collecting tank (11,41,71) is formed by a cup-shaped tubular lower portion of the second stage separation vessel (2,32,62) which is substantially co-axial to the central axis and has a larger internal width than the upper portion (10, 30, 70) of the vessel.

8. The fluid separation assembly of claim 1, wherein a vortex breaker (12,42,72) is arranged in the interior of the secondary separation vessel (2,32,62) between the lower end of the tubular section (10, 30, 70) and the liquid collecting tank (11,41,71).

9. The fluid separation assembly of claim 1, wherein the assembly is provided with one or more ultrasonic vibration transducers for imposing ultrasonic vibrations on one or components of the assembly to inhibit deposition of solidified condensables, such as ice, wax and/or hydrates, within the assembly.

10. The fluid separation assembly of claims 5, 8 and 9, wherein at least the secondary fluid injection conduits (3,33,63) and the vortex breaker (12,42,72) are equipped with ultrasonic vibration transducers.

11. The fluid separation assembly of claim 9 or 10, wherein the ultrasonic vibration transducers are designed to vibrate in use one or more components of the assembly at a frequency between 20 and 200 KHz.

12. The fluid separation assembly of claim 1, wherein the liquid collecting tank (11,41,71)is provided with a grid of heating tubes (20,52,80) which are designed to heat the liquid and solid fluid mixture in the tank to a temperature of at least 15 degrees Celsius.

13. The fluid separation assembly of any preceding claim, wherein each gas cooling device comprises a primary cyclonic inertia separator (1,31) comprising an expansion nozzle (5,35) in which the fluid mixture is cooled to a temperature lower than 0 degrees Celsius by a substantially isentropic expansion and in which one or more swirl imparting vanes (6,36) induce the fluid to swirl into a diverging outlet section (8,38) which is equipped with a central primary condensables depleted fluid outlet conduit (7,37) and an outer secondary condensables enriched fluid outlet conduit (3,33).

14. The fluid separation assembly of claim 13, wherein each primary cyclonic inertia separator (1,31)comprises an expansion nozzle (5,35) which is designed to accelerate the fluid mixture within the nozzle to a supersonic speed, thereby cooling in use the temperature of the fluid passing through the nozzle to a temperature lower than -20 degrees Celsius.

15. The fluid separation assembly of claim 13 or 14, comprising a plurality of primary cyclonic inertia separators (1,31) of which the expansion nozzles (5,35) are substantially parallel and equidistant to the central axis of the tubular section (10,30) of the secondary separation vessel (2,32) and of which the secondary condensables enriched fluid outlets are connected to secondary fluid injection conduits (3,33) which intersect the wall of the tubular section (10,30) of the secondary separation vessel (2,32) at regular circumferential intervals and in an at least partially tangential direction, and which secondary fluid injection conduits (3,33) each have a length less than 4 meters.

16. The fluid separation assembly of claim 1, wherein the gas cooling devices comprise chokes (65) such as Joule Thompson valves.

17. A method of separating condensable components from a fluid mixture in a multistage fluid separation assembly, the method comprising:
injecting the fluid mixture into a primary gas cooling device (1,31,61) in which the fluid mixture is expanded and cooled and condensable component's are liquefied and/or solidified and optionally separated from the gaseous components by centrifugal force, and in which a stream of condensables enriched fluid components is fed into a secondary fluid outlet (3, 33, 63) ; and
injecting the stream of condensables enriched fluid components into a secondary fluid separation vessel (2,32,62) having a tubular section (10,30,70) of which a central axis has a substantially vertical or tilted orientation and in which the condensables enriched fluid stream is induced to swirl around the central axis of the tubular section of the vessel such that a tertiary mixture of liquefied and/or solidified condensables is induced by gravity and centrifugal forces to swirl in downward direction alongside the inner surface of the tubular section of the vessel into a liquid collecting tank (11,41,71) at or near the bottom of the vessel, in which tank the tertiary mixture of liquefied and/or solidified condensables is collected and heated to reduce the amount of solidified condensables and from which tank liquid and/or solidified components are discharged through one or more outlets (23, 26, 53, 56, 83, 84) ;
**characterized in that** a plurality of secondary fluid injection conduits (3,33,63) of a plurality of primary gas cooling devices (1,31,61) are connected at regular circumferential intervals to the tubular section (10,30,70) of the secondary separation vessel (2,32,62), which conduits (3,33,63) inject condensables enriched fluid in an at least partially tangential direction into the interior of the secondary separation vessel (2, 32, 62) .

18. The method of claim 17, wherein the fluid mixture is a natural gas stream which is cooled in gas cooling devices comprising one or more primary cyclonic inertia separators (1, 31) to a temperature below 0 degrees Celsius thereby condensing and/or solidifying aqueous and hydrocarbon condensates and gas hydrates and the tertiary fluid mixture comprises water, ice, hydrocarbon condensates and gas hydrates and is heated in the tertiary fluid collecting tank (11,41,71) to a temperature above 15 degrees Celsius to reduce the amount of gas hydrates, and from which tank low density hydrocarbon condensates are discharged through an upper liquid outlet (26,56,83) and high density aqueous components are discharged through a lower liquid outlet (23, 53, 84).

## Patentansprüche

1. Mehrstufige Fluidtrennvorrichtung mit:
einer primären Gaskühlvorrichtung (1, 31, 61), die einen Auslaß (3, 33, 63) für mit verflüssigtem und/oder verfestigtem Kondensat angereichertes Fluid aufweist; und
einem sekundären Fluidtrenngefäß (2, 32, 62) mit einem rohrförmigen Abschnitt (10, 30, 70), dessen zentrale Achse im wesentlichen vertikale oder geneigte Orientierung hat, wobei das Gefäß an den Auslaß (3, 33, 63) für kondensatangereichertes Fluid der primären Gaskühlvorrichtung (1, 31, 61) angeschlossen ist, so daß während des Normalbetriebes des Gefäßes (2, 32, 62) das kondensatangereicherte Fluid dazu veranlaßt wird, um die zentrale Achse des rohrförmigen Abschnittes (10, 30, 70) des Gefäßes einen Wirbel zu erzeugen, derart, daß ein tertiärer Strom (17, 77) von verflüssigtem und/oder verfestigtem Kondensat durch Schwerkraft oder Zentrifugalkräfte veranlaßt wird, in einer Wirbelbewegung entlang der Innenfläche des rohrförmigen Abschnittes (10, 30, 70) des Gefäßes in Richtung nach unten in einen an oder nahe dem Boden des Gefäßes vorgesehenen Flüssigkeitssammeltank (11, 41, 71) zu strömen, der ein tertiäres Gemisch von verflüssigtem und/oder verfestigtem Kondensat sammelt, wobei der Tank (11, 41, 71) mit einer oder mehreren Heizeinrichtungen (20, 52, 80) zum Erhitzen des tertiären Gemisches, um die Menge an verfestigtem Kondensat zu reduzieren, und mit einem oder mehreren Auslässen (23, 26, 53, 56, 83, 84) zur Abgabe des tertiären Gemisches aus dem Tank (11, 41, 71) versehen ist;
**dadurch gekennzeichnet, daß** eine Vielzahl von sekundären Fluideinspritzleitungen (3, 33, 63) einer Vielzahl von primären Gaskühlvorrichtungen (1, 31, 61) in regelmäßigen Umfangsabständen mit dem rohrförmigen Abschnitt (10, 30, 70) des sekundären Trenngefäßes (2, 32, 62) verbunden ist, wobei die Leitungen (3, 33, 63) im Betrieb kondensatangereichertes Fluid in zumindest teilweise tangentialer Richtung in das Innere des sekundären Trenngefäßes (2, 32, 62) einspritzen.

2. Fluidtrennvorrichtung nach Anspruch 1, bei welcher der Flüssigkeitssammeltank (11, 41, 71) einen oberen Flüssigkeitsauslaß (26, 56, 83) für Flüssigkeitskomponenten niedriger Dichte und einen unteren Flüssigkeitsauslaß (23, 53, 84) für Flüssigkeitskomponenten hoher Dichte aufweist.

3. Fluidtrennvorrichtung nach Anspruch 1 oder 2, bei welcher der rohrförmige Abschnitt (10, 30, 70) des sekundären Trenngefäßes (2, 32, 62) mit einer tertiären Gasauslaßleitung (14, 44, 74) ausgestattet ist, die einen Einlaß aufweist, der an oder nahe der zentralen Achse des rohrförmigen Abschnittes (10, 30, 70) liegt.

4. Fluidtrennvorrichtung nach Anspruch 3, bei welcher das sekundäre Trenngefäß (2, 32, 62) einen Dom oder scheibenförmigen Oberteil (13, 43, 73) aufweist, der an der Oberseite des rohrförmigen Abschnittes (10, 30, 70) montiert ist, und die tertiäre Gasauslaßleitung (14, 44, 74) im wesentlichen koaxial zur zentralen Achse des rohrförmigen Abschnittes angeordnet ist und den Oberteil durchsetzt.

5. Fluidtrennvorrichtung nach Anspruch 1, bei welcher der Auslaß (3, 33, 63) für mit verflüssigtem und/oder mit verfestigtem Kondensat angereichertes Fluid zumindest einer primären Gaskühlvorrichtung (1, 31, 61) mit einer sekundären Fluideinspritzleitung (3, 33, 63) verbunden ist, welche im Betrieb das kondensatangereicherte Fluid in zumindest teilweise tangentialer Richtung in den rohrförmigen Abschnitt (10, 30, 70) des sekundären Trenngefäßes (2, 32, 62) einspritzt.

6. Fluidtrennvorrichtung nach Anspruch 5, bei welcher die zentrale Achse des rohrförmigen Abschnittes (10, 30, 70) des sekundären Trenngefäßes (2, 32, 62) im wesentlichen vertikale Orientierung hat und die Vielzahl von sekundären Fluideinspritzleitungen (3, 33, 63) im Betrieb kondensatangereichertes Fluid in zumindest teilweise tangentialer und teilweise nach unten weisender Richtung in das Innere des sekundären Trenngefäßes (2, 32, 62) einspritzt.

7. Fluidtrennvorrichtung nach Anspruch 1, bei welcher der Flüssigkeitssammeltank (11, 41, 71) durch einen schalenförmigen rohrförmigen unteren Teil des Zweitstufen-Trenngefäßes (2, 32, 62) gebildet wird, der im wesentlichen koaxial zur zentralen Achse verläuft und eine größere Innenweite als der obere Teil (10, 30, 70) des Gefäßes hat.

8. Fluidtrennvorrichtung nach Anspruch 1, bei welcher ein Wirbelbrecher (12, 42, 72) im Inneren des sekundären Trenngefäßes (2, 32, 62) zwischen dem unteren Ende des rohrförmigen Abschnittes (10, 30, 70) und dem Flüssigkeitssammeltank (11, 41, 71) angeordnet ist.

9. Fluidtrennvorrichtung nach Anspruch 1, bei welcher die Vorrichtung mit einem oder mehreren Ultraschallschwingungswandlern ausgestattet ist, um eine oder mehrere Komponenten der Vorrichtung mit Ultraschallschwingungen zu beaufschlagen, um die Ablagerung von verfestigten Kondensaten, wie Eis, Wachs und/oder Hydraten, innerhalb der Vorrichtung zu verhindern.

10. Fluidtrennvorrichtung nach den Ansprüchen 5, 8 und 9, bei welcher zumindest die sekundären Fluideinspritzleitungen (3, 33, 63) und der Wirbelbrecher (12, 42, 72) mit Ultraschallschwingungswandlern ausgerüstet sind.

11. Fluidtrennvorrichtung nach Anspruch 9 oder 10, bei welcher die Ultraschallschwingungswandler so ausgebildet sind, daß sie im Betrieb eine oder mehrere Komponenten der Vorrichtung mit einer Frequenz zwischen 20 und 200 kHz in Schwingung versetzen.

12. Fluidtrennvorrichtung nach Anspruch 1, bei welcher der Flüssigkeitssammeltank (11, 41, 71) mit einem Rost von Heizrohren (20, 52, 80) ausgestattet ist, die so ausgebildet sind, daß sie das Flüssigkeits- und Feststoff-Fluidgemisch im Tank auf eine Temperatur von zumindest 15°C erhitzen.

13. Fluidtrennvorrichtung nach einem der vorhergehenden Ansprüche, bei welcher jede Gaskühlvorrichtung einen primären Zyklon-Schwerkraftseparator (1, 31) aufweist, der eine Expansionsdüse (5, 35) hat, in welcher das Fluidgemisch durch im wesentlichen isotropische Expansion auf eine Temperatur unter 0°C gekühlt wird, und in welcher eine oder mehrere wirbelerzeugende Flügel (6, 36) dem Fluid eine Wirbelbewegung in einem divergierenden Auslaßabschnitt (8, 38) auferlegen, der mit einer zentralen Auslaßleitung (7, 37) für primäres kondensatarmes Fluid und einer äußeren Auslaßleitung (3, 33) für sekundäres kondensatangereichertes Fluid versehen ist.

14. Fluidtrennvorrichtung nach Anspruch 13, bei welcher jeder primäre Zyklon-Schwerkraftseparator (1, 31) eine Expansionsdüse (5, 35) hat, die so ausgebildet ist, daß sie das Fluidgemisch innerhalb der Düse auf Überschallgeschwindigkeit beschleunigt, wodurch im Betrieb eine Abkühlung der Temperatur des durch die Düse strömenden Fluids auf unter -20°C erfolgt.

15. Fluidtrennvorrichtung nach Anspruch 13 oder 14, mit einer Vielzahl von primären Zyklon-Schwerkraftseparatoren (1, 31), deren Expansionsdüsen (5, 35) im wesentlichen parallel und gleich beabstandet zur zentralen Achse des rohrförmigen Abschnittes (10, 30) des sekundären Trenngefäßes (2, 32) sind, und von denen die Fluidauslässe für sekundäres kondensatangereichertes Fluid mit sekundären Fluideinspritzleitungen (3, 33) verbunden sind, welche die Wand des rohrförmigen Abschnittes (10, 30) des sekundären Trenngefäßes (2, 32) in regelmäßigen Umfangsabständen und in zumindest teilweise tangentialer Richtung schneiden, wobei die sekundären Fluideinspritzleitungen (3, 33) je eine Länge von weniger als 4 Metern haben.

16. Fluidtrennvorrichtung nach Anspruch 1, bei welcher die Gaskühlvorrichtungen Drosseln (65), wie Joule Thompson Ventile, aufweisen.

17. Verfahren zum Trennen kondensierbarer Komponenten aus einem Fluidgemisch in einer mehrstufigen Fluidtrennvorrichtung, wobei das Verfahren umfaßt:
Einspritzen des Fluidgemisches in eine primäre Gaskühlvorrichtung (1, 31, 61), in welcher das Fluidgemisch expandiert und gekühlt wird und kondensierbare Komponenten verflüssigt und/oder verfestigt und gegebenenfalls von den gasförmigen Komponenten durch Zentrifugalkraft getrennt werden, wobei ein Strom von kondensatangereicherten Fluidkomponenten einem sekundären Fluidauslaß (3, 33, 63) zugeführt wird; und
Einspritzen des Stromes von kondensatangereicherten Fluidkomponenten in ein sekundäres Fluidtrenngefäß (2, 32, 62) mit einem rohrförmigen Abschnitt (10, 30, 70), dessen zentrale Achse im wesentlichen vertikale oder geneigte Orientierung hat, und in welchem der kondensatangereicherte Fluidstrom dazu veranlaßt wird, um die zentrale Achse des rohrförmigen Abschnittes des Gefäßes zu wirbeln, derart, daß ein tertiäres Gemisch von verflüssigten und/oder verfestigten Kondensaten durch Schwerkraft und Zentrifugalkräfte veranlaßt wird, in Richtung nach unten entlang der Innenfläche des rohrförmigen Abschnittes des Gefäßes in einen Flüssigkeitssammeltank (11, 41, 71) an oder nahe dem Boden des Gefäßes zu wirbeln, in welchem Tank das tertiäre Gemisch von verflüssigten und/oder verfestigten Kondensaten gesammelt und erhitzt wird, um die Menge an verfestigten Kondensaten zu reduzieren, und aus welchem Tank Flüssigkeit und/oder verfestigte Komponenten durch einen oder mehrere Auslässe (23, 26, 53, 56, 83, 84) ausgetragen werden;
**dadurch gekennzeichnet, daß** eine Vielzahl von sekundären Fluideinspritzleitungen (3, 33, 63) einer Vielzahl von primären Gaskühlvorrichtungen (1, 31, 61) in regelmäßigen Umfangsabständen mit dem rohrförmigen Abschnitt (10, 30, 70) des sekundären Trenngefäßes (2, 32, 62) verbunden ist, welche Leitungen (3, 33, 63) kondensatangereichertes Fluid in zumindest teilweise tangentialer Richtung in das Innere des sekundären Trenngefäßes (2, 32, 62) einspritzen.

18. Verfahren nach Anspruch 17, bei welcher das Fluidgemisch ein Erdgasstrom ist, der in einen oder mehrere primäre Zyklon-Schwerkraftseparatoren (1, 31) aufweisenden Gaskühlvorrichtungen auf eine Temperatur unter 0°C gekühlt wird, wodurch wäßrige Kondensate und Kohlenwasserstoffkondensate sowie Gashydrate kondensiert und/oder verflüssigt werden, und das tertiäre Fluidgemisch Wasser, Eis, Kohlenwasserstoffkondensate und Gashydrate aufweist und in dem tertiären Fluidsammeltank (11, 41, 71) auf eine Temperatur oberhalb 15°C erhitzt wird, um die Menge an Gashydraten zu reduzieren, und aus welchem Tank Kohlenwasserstoffkondensate niedriger Dichte durch einen oberen Flüssigkeitsauslaß (26, 56, 83) und wäßrige Komponenten hoher Dichte durch einen unteren Flüssigkeitsauslaß (23, 53, 84) ausgetragen werden.

## Revendications

1. Assemblage de séparation de fluide multiétagé comprenant :
un dispositif de refroidissement de gaz primaire (1, 31, 61) qui comporte une sortie de fluide enrichi en produits condensables liquéfiés et/ou solidifiés (3, 33, 63); et
un récipient de séparation de fluide secondaire (2, 32, 52) comportant une section tubulaire (10, 30, 70) dont un axe central a une orientation sensiblement verticale ou inclinée, lequel récipient est relié à ladite sortie de fluide enrichie en produits condensables (3, 33, 63) dudit dispositif de refroidissement de gaz primaire (1, 31, 61), dans lequel au cours d'une utilisation normale du récipient (2, 32, 62) le fluide enrichi en produits condensables est amené à tourbillonner autour de l'axe central de la section tubulaire (10, 30, 70) du récipient de telle sorte qu'un courant tertiaire (17, 77) de produits condensables liquéfiés et/ou solidifiés soit amené par des forces de gravité et centrifuge à tourbillonner dans une direction descendante le long de la surface intérieure de la section tubulaire (10, 30, 70) du récipient dans un réservoir collecteur de liquide (11, 41, 71) à ou à proximité du fond du récipient pour collecter un mélange tertiaire des produits condensables liquéfiés et/ou solidifiés, lequel réservoir (11, 41, 71) est pourvu d'un ou plusieurs éléments chauffants (20, 52, 80) pour chauffer le mélange tertiaire afin de réduire la quantité de produits condensables solidifiés et d'une ou plusieurs sorties (23, 26, 53, 56, 83, 84) pour évacuer le mélange tertiaire du réservoir (11, 41, 71),
**caractérisé en ce qu'**une pluralité de conduits d'injection de fluide secondaire (3, 33, 63) d'une pluralité de dispositifs de refroidissement de gaz primaire (1, 31, 61) sont reliés à des intervalles circonférentiels réguliers à la section tubulaire (10, 30, 70) du récipient de séparation secondaire (2, 32, 62), lesquels conduits (3, 33, 63) injectent en cours d'utilisation du fluide enrichi en produits condensables dans une direction au moins partiellement tangentielle à l'intérieur du récipient de séparation secondaire (2, 32, 62).

2. Assemblage de séparation de fluide suivant la revendication 1, dans lequel le réservoir collecteur de liquide (11, 41, 71) comprend une sortie de liquide supérieure (26, 56, 83) pour des composants liquides de basse densité et une sortie de liquide inférieure (23, 53, 84) pour des composants liquides de haute densité.

3. Assemblage de séparation de fluide suivant l'une ou l'autre des revendications 1 et 2, dans lequel la section tubulaire (10, 30, 70) du récipient de séparation secondaire (2, 32, 62) est équipée d'un conduit de sortie de gaz tertiaire (14, 44, 74) comportant une entrée qui est disposée à ou à proximité de l'axe central de la section tubulaire (10, 30, 70).

4. Assemblage de séparation de fluide suivant la revendication 3, dans lequel le récipient de séparation secondaire (2, 32, 62) comporte une extrémité supérieure en forme de dôme ou disque (13, 43, 73) qui est monté au-dessus de la section tubulaire (10, 30, 70) et le conduit de sortie de gaz tertiaire (14, 44, 74) est agencé sensiblement coaxialement à l'axe central de la section tubulaire et traverse ladite extrémité supérieure.

5. Assemblage de séparation de fluide suivant la revendication 1, dans lequel la sortie de fluide enrichi en produits condensables liquéfiés et/ou solidifiés (3, 33, 63) d'au moins un premier dispositif de refroidissement de gaz primaire (1, 31, 61) est connectée à un conduit d'injection de fluide secondaire (3, 33, 63) qui injecte en cours d'utilisation le fluide enrichi en produits condensables dans une direction au moins partiellement tangentielle dans la section tubulaire (10, 30, 70) du récipient de séparation secondaire (2, 32, 62).

6. Assemblage de séparation de fluide suivant la revendication 5, dans lequel l'axe central de la section tubulaire (10, 30, 70) du récipient de séparation secondaire (2, 32, 62) a une orientation sensiblement verticale et ladite pluralité de conduits d'injection de fluide secondaire (3, 33, 63) injectent en cours d'utilisation du fluide enrichi en produits condensables dans une direction au moins partiellement tangentielle et partiellement descendante à l'intérieur du récipient de séparation secondaire (2, 32, 62).

7. Assemblage de séparation de fluide suivant la revendication 1, dans lequel le réservoir collecteur de liquide (11, 41, 71) est formé par une partie inférieure tubulaire en forme de coupelle du récipient de séparation de second étage (2, 32, 62) qui est sensiblement coaxial à l'axe central et qui a une plus grande largeur intérieure que la partie supérieure (10, 30, 70) du récipient.

8. Assemblage de séparation de fluide suivant la revendication 1, dans lequel un déflecteur antitourbillon (12, 42, 72) est agencé à l'intérieur du récipient de séparation secondaire (2, 32, 62) entre l'extrémité inférieure de la section tubulaire (10, 30, 70) et le réservoir collecteur de liquide (11, 41, 71).

9. Assemblage de séparation de fluide suivant la revendication 1, dans lequel l'assemblage est pourvu d'un ou plusieurs transducteurs à vibrations ultrasonores pour imposer des vibrations ultrasonores sur un ou des composants de l'assemblage afin d'empêcher le dépôt de produits condensables solidifiés, comme de la glace, de la cire et/ou des hydrates, à l'intérieur de l'assemblage.

10. Assemblage de séparation de fluide suivant l'une quelconque des revendications 5, 8 et 9, dans lequel au moins les conduits d'injection de fluide secondaire (3, 33, 63) et les déflecteurs antitourbillon (12, 42, 72) sont équipés de transducteurs à vibrations ultrasonores.

11. Assemblage de séparation de fluide suivant l'une ou l'autre des revendications 9 et 10, dans lequel les transducteurs à vibrations ultrasonores sont conçus pour faire vibrer en cours d'utilisation un ou plusieurs éléments de l'assemblage à une fréquence entre 20 et 200 kHz.

12. Assemblage de séparation de fluide suivant la revendication 1, dans lequel le réservoir collecteur de liquide (11, 41, 71) est pourvu d'une grille de tubes chauffants (20, 52, 80) qui sont conçus pour chauffer le mélange de fluide liquide et solide dans le réservoir à une température d'au moins 15 degrés Celsius.

13. Assemblage de séparation de fluide suivant l'une quelconque des revendications précédentes, dans lequel chaque dispositif de refroidissement de gaz comprend un séparateur d'inertie cyclonique primaire (1, 31) comprenant une tuyère d'expansion (5, 35) dans laquelle le mélange de fluides est refroidi à une température inférieure à 0 degré Celsius par une expansion essentiellement isentropique et dans laquelle une ou plusieurs vannes communiquant un mouvement tourbillonnaire (6, 36) amènent le fluide à tourbillonner dans une section de sortie divergente (8, 38) qui est équipée d'un conduit de sortie de fluide appauvri en produits condensables, primaire central (7, 37) et d'un conduit de sortie de fluide enrichi en produits condensables, secondaire extérieur (3, 33).

14. Assemblage de séparation de fluide suivant la revendication 13, dans lequel chaque séparateur d'inertie cyclonique primaire (1,31) comprend une tuyère d'expansion (5, 35) qui est conçue pour accélérer le mélange de fluides à l'intérieur de la tuyère à une vitesse supersonique, en refroidissant ainsi en cours d'utilisation la température du fluide passant par la tuyère à une température inférieure à -20 degrés Celsius.

15. Assemblage de séparation de fluide suivant l'une ou l'autre des revendications 13 et 14, comprenant une pluralité de séparateurs d'inertie cycloniques primaires (1, 31) dont les tuyères d'expansion (5, 35) sont sensiblement parallèles et équidistantes à l'axe central de la section tubulaire (10, 30) du récipient de séparation secondaire (2, 32) et dont les sorties de fluide enrichi en produits condensables secondaires sont reliées à des conduits d'injection de fluide secondaires (3, 33) qui coupent la paroi de la section tubulaire (10, 30) du récipient de séparation secondaire (2, 32) à des intervalles circonférentiels réguliers et dans une direction au moins partiellement tangentielle, et lesquels conduits d'injection de fluide secondaires (3, 33) ont chacun une longueur de moins de 4 mètres.

16. Assemblage de séparation de fluide suivant la revendication 1, dans lequel les dispositifs de refroidissement de gaz comprennent des étrangleurs (65) tels que des vannes de Joule Thompson.

17. Procédé de séparation de composants condensables d'un mélange de fluides dans un assemblage de séparation de fluide multiétagé, le procédé comprenant :
l'injection du mélange de fluides dans un dispositif de refroidissement de gaz primaire (1, 31, 51) dans lequel le mélange de fluides est expansé et refroidi et les composants condensables sont liquéfiés et/ou solidifiés et éventuellement séparés des composants gazeux par la force centrifuge, et dans lequel un courant de composants fluides enrichi en produits condensables est amené dans une sortie de fluide secondaire (3, 33, 63); et
l'injection du courant de composants fluides enrichis en produits condensables dans un récipient de séparation de fluides secondaire (2, 32, 62) comportant une section tubulaire (10, 30, 70) dont un axe central a une orientation sensiblement verticale ou inclinée et dans lequel le courant de fluide enrichi en produits condensables est amené à tourbillonner autour de l'axe central de la section tubulaire du récipient de telle sorte qu'un mélange tertiaire de produits condensables liquéfiés et/ou solidifiés soit amené par des forces de gravité et centrifuge à tourbillonner dans une direction descendante le long de la surface intérieure de la section tubulaire du récipient dans un réservoir collecteur de liquide (11, 41, 71) à ou à proximité du fond du récipient, réservoir dans lequel le mélange tertiaire de produits condensables liquéfiés et/ou solidifiés est recueilli et chauffé pour réduire la quantité de produits condensables solidifiés et réservoir à partir duquel les composants liquides et/ou solidifiés sont évacués par une ou plusieurs sorties (23, 26, 53, 56, 83, 84),
**caractérisé en ce qu'**une pluralité de conduits d'injection de fluide secondaires (3, 33, 63) d'une pluralité de dispositifs de refroidissement de gaz primaires (1, 31, 61) sont reliés à des intervalles circonférentiels réguliers à la section tubulaire (10, 30, 70) du récipient de séparation secondaire (2, 32, 62), lesquels conduits (3, 33, 63) injectent du fluide enrichi en produits condensables dans une direction au moins partiellement tangentielle à l'intérieur du récipient de séparation secondaire (2, 32, 62).

18. Procédé suivant la revendication 17, dans lequel le mélange de fluides est un courant de gaz naturel qui est refroidi dans des dispositifs de refroidissement de gaz comprenant un ou plusieurs séparateurs d'inertie cycloniques primaires (1, 31) à une température en dessous de 0 degré Celsius en condensant et/ou solidifiant ainsi les condensats aqueux et d'hydrocarbures et les hydrates de gaz et le mélange tertiaire de fluides comprend de l'eau, de la glace, des condensats d'hydrocarbures et des hydrates de gaz et est chauffé dans le réservoir collecteur de fluide tertiaire (11, 41, 71) à une température au-dessus de 15 degrés Celsius pour réduire la quantité d'hydrates de gaz, et réservoir duquel les condensats d'hydrocarbures de basse densité sont évacués par une sortie de liquides supérieure (26, 56, 83) et les composants aqueux de haute densité sont évacués par une sortie de liquide inférieure (23, 53, 84).
